(19) Europäisches Patentamt
European Patent Office
Office européen des brevets

(11) **EP 4 015 828 A1**

(12) **EUROPÄISCHE PATENTANMELDUNG**

(43) Veröffentlichungstag:
**22.06.2022  Patentblatt 2022/25**

(21) Anmeldenummer: **21206925.6**

(22) Anmeldetag: **08.11.2021**

(51) Internationale Patentklassifikation (IPC):
**F04D 15/00** (2006.01)    **F24D 19/10** (2006.01)

(52) Gemeinsame Patentklassifikation (CPC):
**F04D 15/0066; F04D 15/0088; F24D 19/1012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **17.12.2020  LU 102321**

(71) Anmelder: **WILO SE**
**44263 Dortmund (DE)**

(72) Erfinder:
• **Fiedler, Jens Olav**
  **44263 Dortmund (DE)**
• **Graurock, David**
  **44263 Dortmund (DE)**

(74) Vertreter: **Cohausz Hannig Borkowski Wißgott**
**Patentanwaltskanzlei GbR**
**Schumannstraße 97-99**
**40237 Düsseldorf (DE)**

(54) **VERFAHREN ZUR ERKENNUNG EINER UNTER- ODER ÜBERVERSORGUNG IN EINEM HYDRAULISCHEN NETZWERK**

(57)    Die Erfindung betrifft ein Verfahren zur Erkennung einer Unter- oder Überversorgung von Verbrauchern (R1, R2) in einem Heizungssystem mit mindestens einer Umwälzpumpe (2), die ein Wärmeträgermedium zu den Verbrauchern (R1, R2) fördert, und Thermostatventilen (V1, V2), die jeweils den Förderstrom durch einen der Verbraucher (R1, R2) einstellen. Dabei ist vorgesehen, dass die Umwälzpumpe (2) eine periodisch schwankende Förderhöhe (H) erzeugt und der daraus resultierende Volumenstrom (Q) der Umwälzpumpe (2) ermittelt wird, aus dem anschließend ein Sättigungssignal ($Q_{1,sat}$, $Q_{n,sat}$) berechnet und ausgewertet wird, wobei auf eine Unter- oder Überversorgung geschlossen wird, wenn der Wert des Sättigungssignals ($Q_{1,sat}$, $Q_{n,sat}$) betraglich über einem Grenzwert (G) liegt.

Fig. 4

EP 4 015 828 A1

**Beschreibung**

Die Erfindung betrifft ein Verfahren zur Erkennung einer Unter- oder Überversorgung von Verbrauchern in einem Heizungssystem mit mindestens einer Umwälzpumpe, die ein Wärmeträgermedium zu den Verbrauchern fördert, und Thermostatventilen, die jeweils den Volumenstrom durch einen der Verbraucher einstellen.

Das Problem der Unter- oder Überversorgung von Verbrauchern eines Heizungssystems eines Gebäudes mit Verbrauchern in Form von Heizkörpern ist allgemein bekannt. Im Falle einer Unterversorgung wird ein zu beheizender Raum nicht ausreichend warm, weil der von der Umwälzpumpe erzeugte Differenzdruck zu gering ist, um selbst bei einem vollständig geöffneten Thermostatventil einen ausreichenden Volumenstrom durch den entsprechenden Verbraucher einzustellen. Im Falle einer Überversorgung muss das Thermostatventil dagegen aufgrund zu hohen Drucks der Umwälzpumpe weit schließen, um einen ausreichenden Druckverlust zu erzeugen und so den Volumenstrom durch den entsprechenden Verbraucher zu verringern. Dieser Druckverlust bedeutet jedoch auch gleichzeitig einen energetischen Verlust, der im Falle einer weniger Differenzdruck erzeugenden Umwälzpumpe vermeidbar wäre oder zumindest minimiert werden kann.

Ziel einer optimalen Heizungsregelung ist es, den benötigten Wärmebedarf mit möglichst wenig Energieeinsatz zu decken. Dies ist der Fall, wenn die Thermostatventile in den Räumen an der unteren Stellgrenze sind, d.h. gerade eben ganz geöffnet sind. Wenn der Wärmebedarf weiter steigen oder der Differenzdruck der Umwälzpumpe weiter abgesenkt werden würde, wären die Ventile dann nicht mehr in der Lage, weiter zu öffnen, um den Wärmebedarf zu decken. Mit anderen Worten geht das Stellglied der Regelung, hier in Form eines Thermostatventils, in Sättigung. Aus diesem Grund gibt es Verfahren, die versuchen die aus dieser Ventilstellung resultierende (aktuelle) Anlagenkennlinie des Heizungssystems zu identifizierten und die Pumpenregelung an diese Kennlinie anzupassen. In der Regel wird dabei allerdings eine Lernphase über einen ganzen Tag benötigt, in der der Verlauf des Volumenstroms ausgewertet wird. Dabei wird die minimale Rohrnetzparabel bestimmt und davon ausgegangen, dass das System dann nicht unterversorgt ist, wenn die minimale Rohrnetzparabel nicht erreicht wird. Allerdings ist diese Annahme nur dann gerechtfertigt, wenn das Heizungssystem hydraulisch abgeglichen ist, oder mit anderen Worten alle Ventile gleichzeitig in Sättigung gehen. Dies ist jedoch häufig bei Heizungssystemen nicht der Fall. Darüber hinaus ist eine Überversorgung ebenso unerwünscht, wie eine Unterversorgung, da hier häufig Geräusche an den Thermostatventilen entstehen.

Es ist deshalb Aufgabe der vorliegenden Erfindung ein Verfahren bereitzustellen, das sowohl eine Unterversorgung als auch eine Überversorgung erkennt und hierfür nur einen relativ kurzen Zeitraum, vor allem keine Lernphase benötigt.

Diese Aufgabe wird durch ein Verfahren nach Anspruch 1 gelöst. Vorteilhafte Weiterbildungen sind in den Unteransprüchen angegeben und werden nachfolgend erläutert.

Erfindungsgemäß ist vorgesehen, dass die Umwälzpumpe eine periodisch schwankende Förderhöhe erzeugt und der daraus resultierende Volumenstrom der Umwälzpumpe ermittelt wird, aus dem anschließend ein Sättigungssignal berechnet und ausgewertet wird, wobei auf eine Unter- oder Überversorgung geschlossen wird, wenn der Wert des Sättigungssignals betraglich über einem Grenzwert liegt.

Der Kerngedanke des Verfahrens besteht somit darin, in das Heizungssystem eine periodische Druckschwankung (als Störung des Systems) zu induzieren und die Reaktion der Thermostatventile dahingehend auszuwerten, ob sie die Schwankung auszuregeln vermögen, also eine hohe Steifigkeit gegenüber der Störgröße des Sättigungssignals haben, oder während der Ausregelung gegen ihre obere Stellgrenze (ganz auf) oder untere Stellgrenze (ganz zu) stoßen. Das erfindungsgemäße Sättigungssignal trägt diese Information und kann somit daraufhin ausgewertet werden. Betrachtet man das System aus Sicht der Pumpe, so hat ein ideal steifes System einen unendlich hohen Widerstand, oder einen hydraulischen Leitwert von 0 bei der Anregungsfrequenz, d.h. der Frequenz der periodischen Druckschwankung. Mit anderen Worten stellt sich trotz (periodischer) Änderung der Förderhöhe keine Volumenstromänderung ein.

Vorzugsweise kann die Förderhöhenschwankung so bemessen sein, dass die Thermostatventile die schwankende Förderhöhe ausregeln und somit den Volumenstrom durch den/ die jeweiligen Verbraucher konstant halten können. Dies ist bei einer ausreichend langsamen Schwankung der Förderhöhe der Fall. Beispielsweise kann die Förderhöhe mit einer Periodendauer T zwischen 5 und 60 Minuten schwanken.

Gemäß einer bevorzugten Ausführungsvariante kann die Förderhöhenschwankung durch eine Modulation der Drehzahl der Umwälzpumpe erzeugt werden. Hierzu kann einer Stellgröße der Umwälzpumpe ein Anregungssignal f(t) überlagert werden. Die Stellgröße kann z.B. ein Sollwert für die Drehzahl, das Drehmoment, die elektrische Leistung oder einen Strom der Umwälzpumpe sein. Das Anregungssignal kann sinusförmig sein, z.B. in der Form $f(t) = a \cdot \sin(\omega t)$, mit der Amplitude a und der Anregungsfrequenz $\omega = 1/T$, bzw. der Periode T.

Die Ermittlung des Volumenstroms kann z.B. messtechnisch mit Hilfe eines Volumenstromsensors oder rechnerisch durch Auswertung von anderen Größen der Umwälzpumpe erfolgen. Ein Verfahren zur rechnerischen Ermittlung des Volumenstroms offenbart beispielsweise die deutsche Patentanmeldung DE 102014004336 A1.

In einer ersten Ausführungsvariante kann das Sättigungssignal gebildet sein durch Multiplikation des Volumenstroms der Umwälzpumpe mit dem Anregungssignal f(t) oder einem Sinussignal $\sin(\omega t)$ mit der Anregungsfrequenz $\omega$ des Anregungssignals f(t), und anschließende Integration des so gebildeten Produkts über eine Periode des Anregungssignals f(t) (Fourier Transformation), vorzugsweise gemäß einer der folgenden Formeln:

$$Q_{1,sat} = \frac{2}{T} \int_0^T Q(t) \cdot \mathrm{f}(t)\ \mathrm{d}t$$

oder

$$Q_{1,sat} = \frac{2}{T} \int_0^T Q(t) \cdot \sin(\omega t)\ \mathrm{d}t$$

Das so gebildete Sättigungssignal $Q_{1,sat}$ wird nachfolgend auch Volumenstromintegral genannt. Mit anderen Worten wird in dieser Ausführungsvariante der Anteil der Grundfrequenz des Anregungssignals in dem sich ergebenden Volumenstrom ausgewertet.

In einer zweiten Ausführungsvariante kann das Sättigungssignal gebildet sein durch Multiplikation des Volumenstroms der Umwälzpumpe mit einem Sinussignal $\sin(n\omega t)$ mit einem ganzzahligen Vielfachen n der Frequenz $\omega$ des Anregungssignals f(t) und anschließende Integration des so gebildeten Produkts über eine Periode des Anregungssignals f(t) (Fourier Transformation), vorzugsweise gemäß der folgenden Formel:

$$Q_{n,sat} = \frac{2}{T} \int_0^T Q(t) \cdot \sin(n\omega t)\ \mathrm{d}t$$

Auch in dieser zweiten Ausführungsvariante ist das Sättigungssignal $Q_{n,sat}$ durch ein Volumenstromintegral gebildet. Bei diesem wird allerdings der Anteil der n-ten Harmonischen des Anregungssignals in dem sich ergebenden Volumenstrom ausgewertet.

Die Volumenstromintegrale stellen die zeitliche Änderung des Volumenstroms bei der Anregungsfrequenz bzw. der n-ten Harmonischen dar.

Im idealisierten Fall sorgen die Thermostatventile bei konstantem Wärmebedarf unabhängig von der Förderhöhe für einen konstanten Volumenstrom. D.h. der Volumenstrom ändert sich nicht, weil die Thermostatventile die Förderhöhenänderung quasi instantan ausgleichen. Dies ändert sich allerdings, wenn die Thermostatventile an ihre Stellgrenze stoßen, was bei einer Unterversorgung und einer Überversorgung der Fall ist.

Bei einer Unterversorgung können die Thermostatventile einen gewünschten Volumenstrom durch die Verbraucher nicht mehr einstellen, weil der von der Umwälzpumpe zur Verfügung gestellte Druck bzw. deren Förderhöhe hierzu nicht mehr ausreicht. In diesem Fall sind die Ventile bereits ganz geöffnet und können nicht noch weiter öffnen, um den Volumenstrom zu erhöhen. Sinkt die modulierte Förderhöhe der Umwälzpumpe, sinkt beim Eintreten einer Unterversorgung folglich auch der Volumenstrom. Dies erfolgt zunächst nur während der negativen Halbwelle der Förderhöhenschwankung, bei fortschreitender Förderhöhenabsenkung dann auch bei der positiven Halbwelle. Förderhöhenabsenkung (Drehzahlabsenkung) und Volumenstromänderung verlaufen also gleichgerichtet.

Die periodische Schwankung der Förderhöhe schlägt sich zunehmend im Volumenstromintegral nieder. Genauer gesagt, macht sich die Förderhöhenabsenkung im Frequenzspektrum durch einen ansteigenden positiven Wert des Volumenstromintegrals bemerkbar. Somit kann auf eine Unterversorgung geschlossen werden, wenn oder sobald der Wert des Sättigungssignals positiv d.h. größer null ist bzw. wird. In der praktischen Umsetzung wählt man bevorzugt aufgrund der Abweichungen vom idealisierten Zustand (Änderung des Wärmebedarfs während der Anregungsperiode, Rauschen auf den Messsignalen (Volumenstrom, Drehzahl, etc.)) einen Grenzwert G größer null als Entscheidungsschwelle, um eine Unterversorgung zu erkennen. Das Sättigungssignal wird mit diesem Grenzwert verglichen, wobei auf eine Unterversorgung geschlossen wird, wenn das Sättigungssignal positiv ist und betraglich über dem Grenzwert liegt.

Das Vorstehende gilt einerseits für das Volumenstromintegral bei Anregungsfrequenz. In gleicher Weise können aber auch Harmonische für eine Überversorgungserkennung ausgewertet werden, insbesondere die ungeraden Harmonischen. So kann auf eine Unterversorgung geschlossen werden, wenn der Wert des Sättigungssignals bei der n-ten Harmonischen nw über einem Grenzwert liegt.

Der Vorteil der Auswertung der Volumenstromantwort auf das Anregungssignal liegt insbesondere darin, dass die Fourier-Transformation eine gute Filterwirkung zeigt und somit das Nutzsignal gut von einem evtl. vorhandenen Störsignal unterschieden werden kann. Das Störsignal entsteht, wenn sich der Wärmebedarf des Systems z.B. im Tagesverlauf langsam ändert. Da diese Änderungen eine andere spektrale Zusammensetzung haben als das erfindungsgemäße Anregungssignal, das die periodische Förderhöhenschwankung erzeugt, kann es von diesen unterschieden werden.

In ähnlicher Weise kann auf eine Überversorgung geschlossen werden. Bei einer Überversorgung erhalten die Thermostatventile von der Umwälzpumpe einen zu hohen Druck und sind dann ganz geschlossen (die Ventile sind in Sättigung), da Thermostatventile in der Regel keine beliebig kleinen Ventilöffnungen realisieren können. D.h. es gibt den Fall, dass ein Thermostatventil bei hohem Differenzdruck vollständig schließt, obwohl ein Volumenstrombedarf da ist. Der Volumenstrom ist somit null. Die Ventile öffnen erst dann, wenn die Förderhöhe bzw. der Druck sinkt, können dann jedoch den gewünschten Volumenstrom einstellen. So entspricht der Volumenstrom also entweder dem Sollwert oder ist null. Trotz der Förderhöhen- bzw. Drehzahlabsenkung, steigt der Volumenstrom infolge des Ventilöffnens von null an. Förderhöhenabsenkung (Drehzahlabsenkung) und Volumenstromänderung verlaufen also entgegengesetzt.

Im Frequenzspektrum macht sich dies z.B. durch einen ansteigenden negativen Wert des Volumenstromintegrals bemerkbar. Somit kann auf eine Überversorgung geschlossen werden, wenn oder sobald der Wert des Sättigungssignals negativ, d.h. kleiner null ist bzw. wird. Auch hier kann aufgrund der bestehenden Abweichungen vom idealisierten Zustand (Änderung des Wärmebedarfs während der Anregungsperiode, Rauschen auf den Messsignalen (Volumenstrom, Drehzahl, etc.) ein Grenzwert G als Entscheidungsschwelle verwendet werden, um eine Überversorgung zu erkennen, der hier jedoch negativ wäre. Gleichwohl kann auch ein positiver Grenzwert verwendet und das Sättigungssignal betraglich mit diesem Grenzwert verglichen werden, wobei auf eine Unterversorgung geschlossen wird, wenn das Sättigungssignal negativ ist und betraglich über dem Grenzwert liegt. Auch hier gilt das Vorstehende einerseits für das Volumenstromintegral bei Anregungsfrequenz. In gleicher Weise können aber auch hier Harmonische für eine Überversorgungserkennung ausgewertet werden, insbesondere die ungeraden Harmonischen. So kann auf eine Überversorgung geschlossen werden, wenn der Wert des Sättigungssignals bei der n-ten Harmonischen $n\omega$ negativ ist und betraglich über einem Grenzwert liegt.

Der Grenzwert für die Unterversorgung kann sich vom Grenzwert für die Überversorgung unterscheiden, so dass in der Praxis zwei verschiedene Grenzwerte verwendet werden können.

Verfahrenstechnisch kann zunächst eine Prüfung erfolgen, ob der Wert des Sättigungssignals bei der Anregungsfrequenz $\omega$ oder einer n-ten Harmonischen hierzu betraglich über einem Mindestwert Gmin liegt, um festzustellen, ob überhaupt eine Über- oder Unterversorgung vorliegt, d.h., das Sättigungssignals nicht im Rauschen um null herum liegt. Nachgelagert kann dann geprüft werden, wie das Vorzeichen ist, d.h. ob der Wert des Sättigungssignals größer oder kleiner null ist, um festzustellen, ob es eine Unterversorgung (>0) oder eine Überversorgung (<0) ist. Wenn für die Unter- und Überversorgung derselbe Grenzwert verwendet wird, kann der Mindestwert sogleich diesem gemeinsamen Grenzwert entsprechen. Werden für die Unter- und Überversorgung verschiedene Grenzwerte verwendet kann anschließend an den Vergleich mit dem Mindestwert Gmin anhand des Vorzeichens der entsprechend zu verwendende Grenzwert für die Über- bzw. Unterversorgungserkennung ausgewählt werden. Dieser Grenzwert kann dann betraglich größer sein, als der Mindestwert Gmin. Somit wird die Erkennungssicherheit erhöht und Fehlannahmen werden ausgeschlossen.

Eine Auswertung des Werts des Volumenstromintegrals bei einer n-ten Harmonischen, beispielsweise der 3., 5., 7., 9., 11. oder 13. Harmonischen, kann vorzugsweise dann erfolgen, wenn aufgrund einer hohen thermischen Zeitkonstante des Raumes keine vollständige Ausregelung der Förderhöhenschwankung durch die Thermostatventile bei der Anregungsfrequenz gewährleistet ist, und die Anregungsfrequenz nicht noch weiter abgesenkt werden kann (insbesondere auf eine Periodendauer von mehr als 60 Minuten), weil die Systemantwort auf die Anregung bzw. auf die periodische Förderhöhenschwankung sonst unmerklich wäre.

Um die Erkennungsgenauigkeit des Verfahrens weiter zu verbessern, kann vorgesehen werden, dass die Annahme einer Unter- oder Überversorgung auf Basis mehrerer Perioden getroffen wird. So kann in einer Ausführungsvariante eine Unter- oder Überversorgung erst dann angenommen werden, wenn das Sättigungssignal über mehrere, z.B. 3 bis 5 Integrationsperioden hintereinander über dem Grenzwert liegt.

Es ist auch möglich das Sättigungssignal durch eine Driftkorrektur zu verbessern, indem z.B. der Anfangs- und Endwert des Volumenstromintegrals während einer jeden Periode bestimmt werden und ein linearer Verlauf des Mittelwertes von Anfangs- und Endwert angenommen wird. Der Verlauf dieses Mittelwertes bildet dann ein Driftsignal und das Volumenstromintegral kann dann um den durch dieses Driftsignal erzeugten Anteil korrigiert werden.

Vorteilhaft an dem beschriebenen Verfahren ist, dass die Erkennung einer Unterversorgung auch bei vollständiger Sättigung, also wenn das Thermostatventil während der gesamten Periode geöffnet ist erkannt werden kann, da dann der Volumenstrom dem Anregungssignal folgt. Im Fall der Überversorgung kann diese aber nur erkannt werden, wenn das Ventil zumindest für einen Teil der Periode den gesättigten (geschlossenen) Zustand verlässt, da ansonsten kein Volumenstrom fließt und damit das Volumenstromintegral gleich null ist.

Bei dem Verfahren wird davon ausgegangen, dass sich keine Korrelation zwischen der periodischen Anregung und der resultierenden Volumenstromänderung ergibt, wenn die Ventile im normalen Stellbereich arbeiten. Es sei ferner angemerkt, dass die Sichtbarkeit des Eintritts eines bestimmten Ereignisses im Sättigungssignal infolge einer aktiven Förderhöhenmodulation, insbesondere einer Drehzahlmodulation stets mit einer Verzögerung etwa in Höhe der Integrationszeit erfolgt, da das Integrationsergebnis immer erst am Ende der Integrationszeit vorliegt und dann noch ausgewertet werden muss (Rechenzeit). D.h. im Extremfall ist die Feststellung einer Unter- oder Überversorgung erst nach der Periode T zu sehen, über die integriert wird. Dies ist zumindest zu Beginn des Verfahrens der Fall, d.h. wenn in der Umwälzpumpe 2 eine das Verfahren ausführende Funktion aktiviert wird. Gemäß einer Ausführungsvariante kann am Ende jedes Integrationsintervalls 0 bis T, ein weiteres Integrationsintervall beginnen, so dass die Feststellung einer Unter- oder Überversorgung stets erst nach Vielfachen der Periode T erfolgen kann. Es ist jedoch gemäß einer anderen Ausführungsvariante auch möglich, einen gleitenden Integrationszeitraum von 0+x bis T+x zu verwenden, so dass nach der ersten vollen Periode T zu jedem Zeitpunkt eine Aussage über das Vorliegen einer Unter- oder Überversorgung erfolgen kann.

Die Erfindung betrifft des Weiteren eine Umwälzpumpe für ein Heizungssystem, die eingerichtet ist, das Verfahren nach einem der Ansprüche 1 bis 9 auszuführen.

Weitere Merkmale, Eigenschaften und Vorteile der Erfindung werden nachfolgend anhand eines Ausführungsbeispiels und der beigefügten Figuren erläutert. Es zeigen:

Figur 1:  ein vereinfachtes Heizungssystem in schematischer Darstellung

Figur 2:  ein Diagramm mit Kurvenverläufen des Drucks Δp, des Volumenstroms Q und des Volumenstromsignals $Q_{1,sin}$ bei Unterversorgung

Figur 3:  ein Diagramm mit Kurvenverläufen des Drucks Δp, des Volumenstroms Q und des Volumenstromsignals $Q_{1,sin}$ bei Überversorgung

Figur 4:  ein Ablaufdiagramm des erfindungsgemäßen Verfahrens.

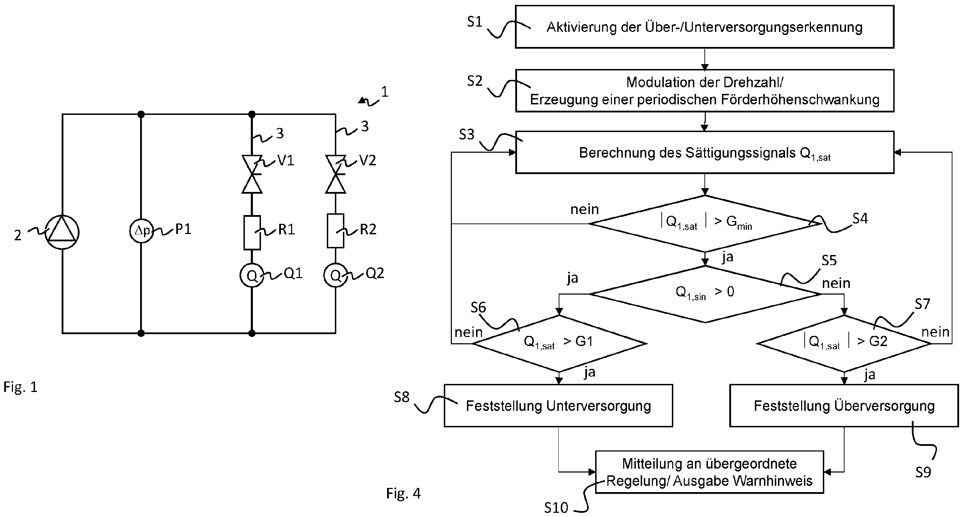

Das erfindungsgemäße Verfahren zur Erkennung einer Unter- oder Überversorgung in einem Heizungssystem 1 wird nachfolgend anhand einer Simulation eines vereinfachten Heizungssystems 1 erläutert, das in Figur 1 schematisch dargestellt ist. Das betrachtete Heizungssystem 1 eines Gebäudes umfasst hier beispielhaft nur zwei parallele Stränge 3 des Systems 1 angeordnete Verbraucher R1, R2 in Gestalt von Heizkörpern, zu denen eine zentrale Umwälzpumpe 2 ein Wärmeträgermedium fördert. In jedem Strang 3 ist ferner ein Thermostatventil V1, V2 angeordnet bzw. jedem der Verbraucher R1, R2 zugeordnet, das in Abhängigkeit der Differenz zwischen einer vorgegebenen und einer gemessenen Raumtemperatur den Volumenstrom Q1, Q2 durch den entsprechenden Strang 3 einstellt.

Regelungstechnisch bilden die Thermostatventile V1, V2 jeweils einen P-Regler und hydraulisch einen variablen Widerstand, während die Verbraucher R1, R2 und Stränge 3, also die die Zu- und Ableitung zu bzw. von diesen Verbraucher R1, R2 bildenden Rohrleitungen, jeweils einen konstanten Widerstand bilden. Der Stellbereich der Thermostatventile V1, V2 reicht vom Wert 0 (Öffnungsgrad 100%), bei dem das jeweilige Ventil voll geöffnet ist, bis zum Wert unendlich (Öffnungsgrad 0%), bei dem das Ventil geschlossen ist. Allerdings wird angenommen, dass die Ventile bereits unterhalb eines Öffnungsgrades von 10% vollständig geschlossen sind, d.h. einen unendlich großen Widerstand darstellen, so dass kein Volumenstrom durch den entsprechenden Strang fließt. Figur 1 zeigt außerdem einen Differenzdrucksensor P1 und zwei Volumenstromsensoren Q1, Q2 in den Strängen 3. Weitere Komponenten eines üblichen Heizungssystems, wie z.B. Brenner, Wärmetauscher, hydraulische Weiche, Ausdehnungsgefäß, weitere Sensorik, sind aus Gründen der Vereinfachung in Figur 1 nicht gezeigt.

Vereinfachend kann angenommen werden, dass jedes Thermostatventil V1, V2 den zum Erreichen der Soll-Temperatur in dem jeweiligen Raum bzw. Raumbereich, den der entsprechende Verbraucher R1, R2 beheizen soll, benötigten Volumenstrom Q1, Q2 verzögerungsfrei einstellt. Dies wird in der Realität dadurch erreicht, dass die im Folgenden beschriebenen Abläufe so langsam ablaufen, dass die Zeitkonstante der Regelung der Thermostatventil V1, V2 vernachlässigt werden kann.

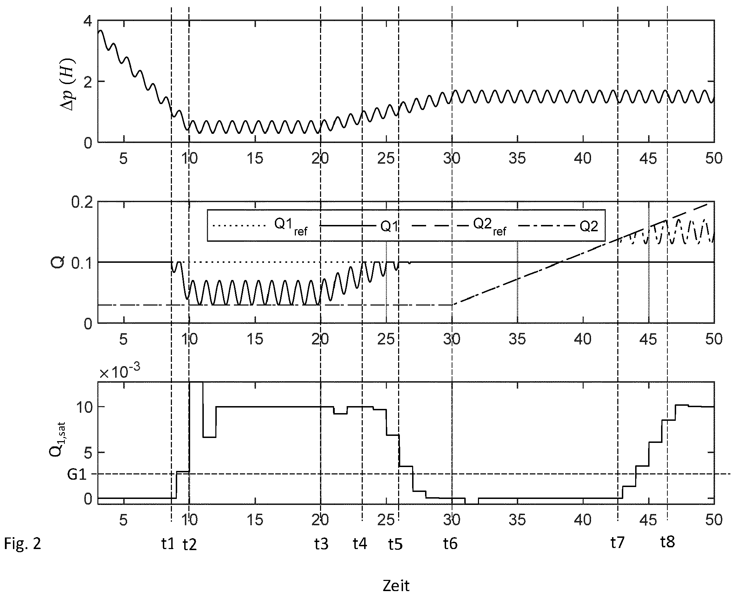

Figur 2 zeigt drei übereinanderliegende Diagramme mit zeitlichen Verläufen relevanter Größen. Alle Größen sind hier dimensionslos dargestellt, da es sich nur um eine Simulation eines Modells eines prinzipiellen Heizungssystems 1 handelt.

Das obere Diagramm stellt den Differenzdruck Δp der Umwälzpumpe 2 über der Zeit t dar, der, abgesehen von der Skalierung und Dimension, gleichzeitig die Förderhöhe H der Umwälzpumpe 2 repräsentiert, weshalb nachfolgend nur von der Förderhöhe gesprochen wird. Erfindungsgemäß erzeugt die Umwälzpumpe 2 eine periodisch schwankende Förderhöhe, indem einer Stellgröße n(t) der Umwälzpumpe 2 ein sinusförmiges Anregungssignal f(t) überlagert wird. In diesem Beispiel ist die Stellgröße n(t) ein Drehzahlsollwert der Umwälzpumpe 2, der von einer übergeordneten Regelung vorgegeben wird. Mathematisch beschrieben, stellt sich die so gebildete neue Stellgröße n*(t) für die Drehzahl dann in der Form n*(t) = n(t) + f(t) dar. Das Anregungssignal f(t) ist durch f(t) = a·sin(ωt) mit der Amplitude a und der Anregungsfrequenz ω = 1/T gebildet, wobei T die Periode ist. Es wird eine niedrige Anregungsfrequenz ω gewählt, beispielsweise mit einer Periode zwischen 20 und 60 Minuten gewählt, damit die Thermostatventile V1, V2 den Volumenstrom Q1, Q2 verzögerungsfrei bzw. ohne nennenswerte Phasenverschiebung an die sich ändernde Förderhöhe anpassen können. Die Amplitude a ist so gewählt, dass die Drehzahlschwankung zwischen 0,1-10% der Maximaldrehzahl der Umwälzpumpe 2, beispielsweise zwischen 5 U/min und 200 U/min liegt.

Die übergeordnete Regelung senkt die Förderhöhe bis zum Zeitpunkt t2 allmählich ab, indem der überlagerungsfreie Stellgröße n(t) für die Drehzahl stetig verringert wird. Diese Regelung kann zum Beispiel eine übergeordnete Automatik-Regelung der Umwälzpumpe 2 sein, die eine Energiesparfunktion realisiert und dabei versucht, stets die minimale Förderhöhe einzustellen, um den aktuellen Bedarf des Heizungssystems 1 mit minimalem Energieaufwand zu decken. Die Regelung senkt die Drehzahl n(t) so lange ab, bis sie von der erfindungsgemäßen Unterversorgungserkennung eine Mitteilung bekommt, dass die Ventile am Anschlag sind. Ist dies der Fall, hebt sie die Drehzahl wieder an, um eine Unterversorgung zu vermeiden.

Das mittlere Diagramm zeigt die resultierenden Kurvenverläufe für den Volumenstrom Q1 durch den ersten Verbraucher R1 und den Volumenstrom Q2 durch den zweiten Verbraucher R2. Bei dem ersten Thermostatventil V1 wird simuliert, dass dessen Werte für Soll- und Ist-Temperatur derart sind, dass ein Volumenstrom $Q1_{ref}$ von 0,1 eingestellt werden muss. Ferner wird bei dem zweiten Thermostatventil V2 simuliert, dass zunächst ein Volumenstrom $Q2_{ref}$ von 0,05 eingestellt werden muss, der dann später linear ansteigt. Bis zum Zeitpunkt t1 = 9 ist das erste Thermostatventil V1 in der Lage nachzuregeln, d.h. den geforderten Volumenstrom $Q1_{ref}$ von 0,1 trotz der Förderhöhenschwankung konstant zu halten. Das bedeutet, dass das erste Thermostatventil V1 in seinem Arbeitsbereich arbeitet, und periodisch öffnet, wenn die Förderhöhe H sinkt, und schließt, wenn sie steigt, ohne an eine Stellgrenze zu stoßen. Für das zweite Ventil V2 ist dies bis zum Zeitpunkt t6 der Fall.

Das untere Diagramm zeigt ein aus dem Volumenstrom Q = Q1 + Q2 der Umwälzpumpe 2 erfindungsgemäß ermitteltes Sättigungssignal $Q_{1,sat}$ über der Zeit t, das durch Integration des mit dem ungewichteten (d.h. ohne Amplitude a) Anregungssignal f(t) multiplizierten Volumenstroms Q über eine Periode T erhalten wurde:

$$Q_{1,sat} = \int_0^T Q \cdot sin(\omega t)dt$$

Dieses untere Diagramm gibt denjenigen Signalanteil an, den die Anregungsfrequenz ω (Grundfrequenz) im Volumenstrom Q hat bzw. verursacht. Wie man daran erkennt, ist die periodische Anregung der Förderhöhe H aufgrund der Nachregelfähigkeit der Thermostatventile V1, V2 bis zum Zeitpunkt t1 nicht im Sättigungssignal $Q_{1,sat}$ zu erkennen ($Q_{1,sat}$ = 0 für $t \in [0, t1]$), da der Volumenstrom Q bzw. die Volumenströme Q1, Q2 durch die Thermostatventile V1, V2 konstant gehalten werden kann/ können. Man kann auch sagen, dass die Steifigkeit oder der Widerstand des Heizungssystems 1 bei der Anregungsfrequenz ω unendlich hoch ist. Folglich ist das Sättigungssignal $Q_{1,sat}$ bis zum Zeitpunkt t1 gleich null.

Ab dem Zeitpunkt t1 kann der Volumenstrom Q1ref vom ersten Thermostatventil V1 allerdings nicht mehr für jede Förderhöhe eingestellt werden. Das bedeutet, dass die Förderhöhe soweit abfällt, dass das erste Thermostatventil V1 an seine untere Stellgrenze (Öffnungsgrad 100%) stößt, d.h. nicht weiter öffnen kann, da es bereits voll geöffnet ist. Dies ist der Beginn einer Unterversorgung, die zunächst zeitweise, nämlich während des Scheitels einer negativen Halbwelle, später während der gesamten Periode vorliegt. Der Volumenstrom Q1 im ersten Strang 3 folgt dann dem periodischen Verlauf der Förderhöhe H. Dies ist auch im Sättigungssignal $Q_{1,sat}$ zu erkennen, da dieses nach dem Zeitpunkt t1 nicht mehr null ist. Aufgrund des Integrationszeitraums T tritt ein von null verschiedenes Sättigungssignal $Q_{1,sat}$ > 0 allerdings um einen Takt (= Periode T) verzögert auf. Der hydraulische Widerstand, den die Umwälzpumpe 2 nun bei der Anregungsfrequenz ω sieht, ist deutlich gefallen.

Im Zeitraum zwischen t2 und t3 (Zeitraum 10-20) wird die Förderhöhe H nicht weiter abgesenkt. Abgesehen von der Integrationszeit bedingten Verzögerung ist das Sättigungssignal $Q_{1,sat}$ in diesem Zeitraum konstant. In diesem Zeitraum ist der von dem ersten Verbraucher R1 beheizte Raumbereich dauerhaft unterversorgt. Die überlagerte Regelung kann nun auf diese Information reagieren und die Förderhöhe wieder anheben, wie dies hier beispielhaft im Zeitraum t3=20<t<30=t6 erfolgt. In Folge dessen kommt das Ventil V1 wieder aus der Sättigung heraus, was ab dem Zeitpunkt t4=23 zeitweise, ab dem Zeitpunkt t5=26 dauerhaft gelingt. Dies kann man auch an dem Sättigungssignal $Q_{1,sat}$ erkennen, welches in dem Zeitraum t4-t6 wieder auf null abfällt. Die überlagerte Regelung erhält diese Information und reagiert derart, dass sie die Förderhöhe H ab dem Zeitpunkt t6=30 nicht weiter anhebt.

Ab dem Zeitpunkt t6 wird im Beispiel angenommen, dass fortan der Wärmebedarf im zweiten Strang 3 steigt, was einen Anstieg des dort benötigten Volumenstroms $Q2_{ref}$ zur Folge hat. Der Wärmebedarf steigt auf einen Wert an, der von dem Differenzdruck der Umwälzpumpe 2 nicht gedeckt werden kann, so dass hier ab t7=43 eine Sättigung im zweiten Strang 3 auftritt (Ventil V2 stößt an seine Stellgrenze 100% offen), zunächst zeitweise und ab dem Zeitpunkt t8= 46,5 dauerhaft. Auch dies wird im Sättigungssignal $Q_{1,sat}$ sichtbar, da es wieder von null auf positive Werte ansteigt. Hierdurch kann die übergeordnete Regelung wieder reagieren, indem sie die Förderhöhe weiter erhöht.

Das verwendete Sättigungssignal $Q_{1,sat}$ ist somit Träger der Information über eine Unterversorgung. Eine Unterversorgung liegt vor, sobald das Sättigungssignal $Q_{1,sat}$ einen nennenswerten positiven Wert hat. Hierzu kann ein Grenzwert G1 festgelegt werden, der als Entscheidungsschwelle dient. Auf eine Unterversorgung kann dann geschlossen werden, wenn das Sättigungssignal $Q_{1,sat}$ diesen Grenzwert G1 erreicht oder überschreitet.

Es sei angemerkt, dass die Sichtbarkeit des Eintritts eines bestimmten Ereignisses im Volumenstrom Q, im Sättigungssignal $Q_{1,sin}$ stets erst am Ende des Integrationszeitraums, d.h. mit einer Verzögerung von einer Periode T bzw. einem Takt T erfolgt. Des Weiteren ergeben sich Schwankungen des Wertes des Sättigungssignals $Q_{1,sat}$, wenn sich der Mittelwert der periodischen Schwankung, genauer gesagt der überlagerungsfreie Drehzahlsollwert n(t), oder der Volumenstrombedarf während der Anregungsperiode ändern. Aus diesem Grund ist es sinnvoll, die Entscheidungsschwelle G1 auf einen Wert größer null zu legen.

Die Entscheidung zur Erkennung einer Unterversorgung kann auf Basis mehrerer aufeinanderfolgender Perioden getroffen werden, um die Erkennungssicherheit zu erhöhen. Es ist außerdem möglich, das Signal durch eine Driftkorrektur zu verbessern.

Das erfindungsgemäße Verfahren ermöglicht es, eine Unterversorgung in einem einzelnen Strang zu erkennen, ohne dass dafür ein gesamter Tageszyklus des Heizungsbetriebs abgewartet und ausgewertet werden muss. Eine Aussage über das Vorliegen einer Unterversorgung ist bereits frühzeitig möglich, in der Praxis nach einem Zeitraum einiger weniger Vielfachen der Zeitkonstante der Thermostatventile, idealerweise nach 5 bis 60 min. Ein besonderer Vorteil des Verfahrens besteht darin, dass es auch dann funktioniert, wenn das Heizungssystem nicht oder nicht richtig hydraulisch abgeglichen ist.

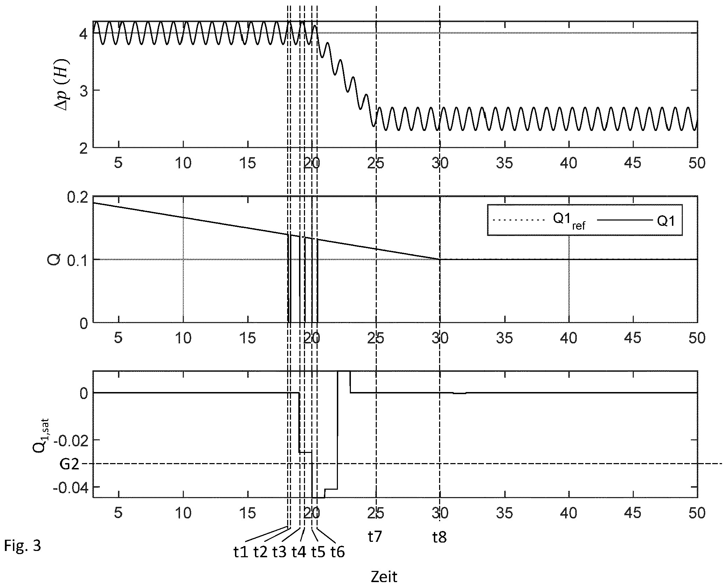

In analoger Weise zur dargestellten Erkennung einer Unterversorgung kann eine Überversorgung festgestellt werden, wie nachfolgend anhand von dem Beispiel in Figur 3 erläutert wird.

Figur 3 zeigt in Entsprechung zur Figur 2 die drei übereinander angeordneten Kurvendiagramme für den periodisch schwankenden Differenzdruck Δp bzw. die Förderhöhe H (oberes Diagramm), den daraus resultierenden Volumenstrom Q1 im Strang 3 des ersten Verbrauchers 1 einschließlich dem dort einzustellenden Sollwert $Q1_{ref}$ (mittleres Diagramm) und das Sättigungssignal $Q_{1,sat}$ (unteres Diagramm).

In dem Beispiel wird zunächst angenommen, dass die Heizstränge 3 initial einen hohen Wärmebedarf haben und die Umwälzpumpe 2 entsprechend eine große Förderhöhe H erzeugt. Das erste Thermostatventil V1 ist zunächst in der Lage, den erforderlichen Volumenstrom Q einzustellen und konstant zu halten, indem es die periodische Schwankung der Förderhöhe H ausregelt.

Verringert sich nun der Wärmebedarf des ersten Stranges 3, wie dies bis zum Zeitpunkt t8=30 der Fall ist, schließt das erste Thermostatventil V1 zunehmend. Es wird angenommen, dass das Thermostatventil V1 einen Öffnungsgrad von 10%-100% einstellen kann, unterhalb 10% jedoch komplett schließt. In diesem Fall ist die obere Stellgrenze erreicht. Dies ist in Figur 3 zum Zeitpunkt t1 der Fall. Der einzustellenden Sollwert $Q1_{ref}$ ist dann auf einen Wert gesunken, bei dem das erste Thermostatventil V1 aufgrund des unverändert hohen Differenzdrucks gegen die obere Stellgrenze stößt und vollständig schließt. Dadurch sinkt der Volumenstrom Q auf null. Dieser Zustand liegt allerdings nur für die Dauer des Scheitels der positiven Halbwelle im Druckverlauf vor, d.h. bis zum Zeitpunkt t2. Jenseits des Scheitels ist die Förderhöhe geringer, so dass das Ventil wieder einen Öffnungsgrad von mehr als 10% einstellt und ein Volumenstrom Q>0 fließt. Dies ist zumindest bis zum Scheitel der nächsten positiven Halbwelle der Fall, d.h. bis zum Zeitpunkt t3. Hier schlägt das Ventil V1 erneut an seine obere Stellgrenze und der Volumenstrom Q fällt wieder auf null. Zum Zeitpunkt t4 öffnet das Ventil V1 wieder. In Figur 3 folgt in dem Zeitraum zwischen t5 und t6 noch eine weitere positive Halbwelle in der Differenzdruckschwankung, bei deren Scheitelwert das Ventil V1 schließt und der Volumenstrom auf null fällt. Infolge der mehrfachen, annähernd sprunghaften Änderung des Volumenstroms zwischen null und $Q1_{ref}$ ergeben sich für das Sättigungssignal $Q_{1,sat}$ in diesem Bereich t1 bis t6 negative Werte.

Das verwendete Sättigungssignal $Q_{1,sat}$ ist somit ebenfalls Träger der Information über eine Überversorgung. Eine Überversorgung liegt vor, sobald das Sättigungssignal $Q_{1,sat}$ einen nennenswerten negativen Wert hat. Hierzu kann ebenfalls ein Grenzwert G2 festgelegt werden, der als Entscheidungsschwelle dient. Auf eine Überversorgung kann dann geschlossen werden, wenn das Sättigungssignal $Q_{1,sat}$ betraglich diesen Grenzwert G2 erreicht oder überschreitet und gleichzeitig negativ ist.

Wenn das Ventil V1 während der gesamten Anregungsperiode in Sättigung wäre, kann die Überversorgung nicht erkannt werden, da hier das Sättigungssignal, bzw. der hydraulische Leitwert, gleich null ist. Dementsprechend sollte auf eine Überversorgung schnell reagiert und die Förderhöhe H der Pumpe 2 abgesenkt werden. Im Beispiel der Figur 3 ist zu erkennen, dass die Förderhöhe H ab dem Zeitpunkt t5 sinkt. Dies ist von der übergeordneten Regelung veranlasst und wird bis zum Zeitpunkt t7 fortgesetzt. Durch diese Förderhöhenabsenkung wird das Ventil aus der Sättigung gefahren, und kann den zur Deckung des Wärmebedarfs notwendigen Volumenstrom $Q1_{ref}$ wieder einstellen, d h. die periodische Schwankung der Förderhöhe H ausregeln. Ab dem Zeitpunkt t8=30 ist der Wärmebedarf des ersten Stranges 3 konstant.

Eine Möglichkeit, die Erkennung zu beschleunigen, besteht darin, die Anregungsfrequenz ω des Anregungssignals f(t) zu erhöhen, beispielsweise so zu wählen, dass das Anregungssignal eine Periode T von weniger als 20 Minuten hat, zum Beispiel zwischen 5 und 20 Minuten. Zwar werden in diesem Fall einer zu schnellen Modulation der Förderhöhe H die Thermostatventile den Volumenstrom Q nicht mehr konstant halten können, so dass sich eine zur Anregung bzw. schwankenden Förderhöhe H phasenverschobene Schwingung im Volumenstrom Q zeigen wird. In diesem Fall kann die Erkennung einer Unter- oder Überversorgung jedoch anhand der Harmonischen im Volumenstromverlauf Q erfolgen. Hierzu wird das entsprechende Sättigungssignal $Q_{n,sat}$ ermittelt, das den durch ein ganzzahliges Vielfaches n der Anregungsfrequenz ω (n-te Harmonische) bedingten Signalanteil im Volumenstrom Q beschreibt. Dieses Sättigungssignal $Q_{n,sat}$ kann durch Multiplikation des Volumenstroms der Umwälzpumpe 2 mit einem Sinussignal $\sin(n\omega t)$ mit einem ganzzahligen Vielfachen n der Frequenz $\omega$ des Anregungssignals f(t), und anschließende Integration des so gebildeten Produkts über eine Periode des Anregungssignals f(t) gebildet sein:

$$Q_{n,sat} = \int_0^T Q \cdot \sin(n\omega t)dt$$

So kann beispielsweise geprüft werden, ob und in welchem Maße Oberschwingungen der Anregungsfrequenz z.B. Harmonische ungerader Ordnung n = 3, 5, 7, 9, 11 oder 13 vorhanden sind, da sich diese in dem Fall einer zu schnellen Modulation bilden. Die Auswertung kann ebenfalls durch einen Vergleich mit einem Grenzwert und/ oder durch Auswertung des Vorzeichens des Werts des Sättigungssignals $Q_{n,sat}$ bei der n-ten Harmonischen erfolgen. Gegebenenfalls können auch mehrere Harmonische gemeinsam betrachtet werden.

Figur 4 zeigt ein Ablaufdiagramm des erfindungsgemäßen Verfahrens. Es beginnt in Schritt S1 mit seiner Aktivierung bzw. der Aktivierung der erfindungsgemäßen Über-/Unterversorgungserkennung in einer Steuer- und Regelungselektronik der Umwälzpumpe 2. Die Aktivierung kann manuell erfolgen. Dabei kann die Über-/Unterversorgungserkennung entweder eine hinzuschaltbare Funktion sein oder Teil einer übergeordneten Drehzahlregelung, insbesondere einer Automatik-Regelung sein. In diesem Fall wird die Über-/Unterversorgungserkennung automatisch aktiviert, wenn diese Automatik-Regelung aktiviert wird. Es kann auch vorgesehen sein, dass die Automatik-Regelung werksseitig bereits mitsamt der Über-/Unterversorgungserkennung in der Steuer- und Regelungselektronik der Umwälzpumpe 2 aktiviert worden ist.

Die übergeordnete Regelung gibt einen Drehzahlsollwert n(t) aus, der in Schritt S2 moduliert wird, um eine periodische Förderhöhenschwankung zu erzeugen. Die Modulation erfolgt durch Überlagerung des Drehzahlsollwerts n(t) mit einem sinusförmigen Anregungssignal mit einer Periode T zwischen 5 und 60 Minuten wie zuvor beschrieben. Anschließend wird in Schritt S3 das Sättigungssignal $Q_{1,sat}$ berechnet und dessen Wert betraglich mit einem Mindestwert Gmin verglichen, Schritt S4. Der Mindestwert Gmin liegt über den rausch- und störungsbedingten Werten des Sättigungssignal $Q_{1,sat}$. Ist der Mindestwert nicht überschritten, liegt keine Auffälligkeit vor und das Sättigungssignal $Q_{1,sat}$ wird für die nächste Periode T berechnet, Schritt S3. Alternativ kann auch ein gleitender Integrationszeitraum von 0+x bis T+x verwendet werden, so dass nach der ersten Integration über eine volle Periode, zu jedem Zeitpunkt t ein Wert des Sättigungssignal $Q_{1,sat}$ vorliegt.

Ist der Mindestwert Gmin überschritten, liegt im Volumenstrom ein merklicher Wechselanteil vor, der auf eine Unter- oder Überversorgung deutet. Um dies zunächst zu unterscheiden und anschließend zu verifizieren, erfolgt eine Prüfung, ob das Sättigungssignal $Q_{1,sat}$ positiv oder negativ ist, Schritt S5. Ist es positiv, kann eine Unterversorgung vorliegen. Dieser Fall ist dem ja-Zweig in Schritt S5 zugeordnet. Ist es negativ, kann eine Überversorgung vorliegen. Dieser Fall ist dem nein-Zweig in Schritt S5 zugeordnet. In Abhängigkeit dieser Annahme, kann dann ein bestimmter Grenzwert G1 oder G2 verwendet werden, um die Annahme zu verifizieren.

Ist das Sättigungssignal $Q_{1,sat}$ größer als der Grenzwert G1, was in Schritt S6 geprüft wird, liegt eine Unterversorgung vor, Schritt S8. Ist das Sättigungssignal $Q_{1,sat}$ dagegen betraglich größer als der Grenzwert G2 (und negativ), was in Schritt S7 geprüft wird, liegt eine Überversorgung vor, Schritt S9. Ist das Sättigungssignal $Q_{1,sat}$ allerdings nicht größer als der entsprechende Grenzwert G1 oder G2, (nein-Zweige von S6, S7), kann keine eindeutige Aussage über eine Über- oder Unterversorgung getroffen werden und das Verfahren wird bei Schritt S3 fortgesetzt. Die Überschreitung des Mindestwerts $G_{min}$ war in dem Fall lediglich das Ergebnis einer Störung, jedoch nicht bedingt durch die Tatsache, dass eines der Ventile V1, V2 des Heizungssystems 1 gegen eine Stellgrenze stößt bzw. in Sättigung gerät.

Die Feststellung der Über- oder Unterversorgung (Schritte S8, S9) wird der übergeordneten Regelung mitgeteilt, Schritt S10, welche hierauf dann entsprechend reagieren kann, z.B. durch Erhöhung des überlagerungsfreien Drehzahlsollwerts im Falle einer Unterversorgung oder Reduzierung des überlagerungsfreien Drehzahlsollwerts im Falle einer Überversorgung. Die Feststellung kann außerdem als Warnhinweis an der Umwälzpumpe 2 ausgegeben werden.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls" oder "geeignet" angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, ungeachtet dessen, ob die Änderung, Abwandlung oder Modifikationen zu einer Verbesserung oder Verschlechterung einer Ausführungsform führt.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

**Patentansprüche**

1. Verfahren zur Erkennung einer Unter- oder Überversorgung von Verbrauchern (R1, R2) in einem Heizungssystem mit mindestens einer Umwälzpumpe (2), die ein Wärmeträgermedium zu den Verbrauchern (R1, R2) fördert, und Thermostatventilen (V1, V2), die jeweils den Förderstrom durch einen der Verbraucher (R1, R2) einstellen, **dadurch gekennzeichnet, dass** die Umwälzpumpe (2) eine periodisch schwankende Förderhöhe (H) erzeugt und der daraus resultierende Volumenstrom (Q) der Umwälzpumpe (2) ermittelt wird, aus dem anschließend ein Sättigungssignal ($Q_{1,sat}$, $Q_{n.sat}$) berechnet und ausgewertet wird, wobei auf eine Unter- oder Überversorgung geschlossen wird, wenn der Wert des Sättigungssignals ($Q_{1,sat}$, $Q_{n.sat}$) betraglich über einem Grenzwert (G) liegt.

2. Verfahren nach Anspruch 1, **dadurch gekennzeichnet, dass** die Förderhöhenschwankung so bemessen ist, dass die Thermostatventile (V1, V2) die schwankende Förderhöhe (H) ausregeln und somit den Volumenstrom (Q1, Q2) durch den/ die jeweiligen Verbraucher (V1, V2) konstant halten können.

3. Verfahren nach Anspruch 1 oder 2, **dadurch gekennzeichnet, dass** die Förderhöhe (H) mit einer Periodendauer zwischen 5 und 60 Minuten schwankt.

4. Verfahren nach einem der vorherigen Ansprüche, **dadurch gekennzeichnet, dass** die Förderhöhe (H) von einer übergeordneten Regelung vorgegeben und zur Energieoptimierung allmählich reduziert wird, bis der Wert des Sättigungssignals ($Q_{1,sat}$, $Q_{n,sat}$) betraglich über dem Grenzwert (G) liegt.

5. Verfahren nach einem der vorherigen Ansprüche, **dadurch gekennzeichnet, dass** die Förderhöhenschwankung durch eine Modulation der Drehzahl der Umwälzpumpe (2) erzeugt wird, indem einer Stellgröße der Umwälzpumpe (2) ein Anregungssignal (f(t)) überlagert wird.

6. Verfahren nach Anspruch 4, **dadurch gekennzeichnet, dass** das Anregungssignal (f(t)) sinusförmig ist.

7. Verfahren nach Anspruch 5 oder 6, **dadurch gekennzeichnet, dass** das Sättigungssignal ($Q_{1,sat}$, $Q_{n,sat}$) durch Multiplikation des Volumenstroms (Q) der Umwälzpumpe (2) mit dem Anregungssignal (f(t)) oder mit einem Sinussignal mit der Frequenz oder einem Vielfachen der Frequenz des Anregungssignals (f(t)), und durch anschließende Integration des so gebildeten Produkts über eine Periode des Anregungssignals (f(t)) gebildet wird.

8. Verfahren nach einem der vorherigen Ansprüche, **dadurch gekennzeichnet, dass** auf eine Unterversorgung geschlossen wird, wenn oder sobald der Wert des Sättigungssignals ($Q_{1,sat}$, $Q_{n,sat}$) positiv wird.

9. Verfahren nach einem der vorherigen Ansprüche, **dadurch gekennzeichnet, dass** auf eine Überversorgung geschlossen wird, wenn oder sobald der Wert des Sättigungssignals ($Q_{1,sat}$, $Q_{n,sat}$) negativ ist.

10. Umwälzpumpe (2) für ein Heizungssystem, **dadurch gekennzeichnet, dass** sie eingerichtet ist, das Verfahren nach einem der Ansprüche 1 bis 9 auszuführen.

EP 4 015 828 A1

Fig. 1

2 — (pump symbol)   $\Delta p$ — P1   V1   V2   3   3   R1   R2   Q1 — Q1   Q2 — Q2   1

**S1** Aktivierung der Über-/Unterversorgungserkennung

**S2** Modulation der Drehzahl/ Erzeugung einer periodischen Förderhöhenschwankung

**S3** Berechnung des Sättigungssignals $Q_{1,sat}$

**S4** $|Q_{1,sat}| > G_{min}$   nein   ja

**S5** $Q_{1,sin} > 0$   ja   nein

**S6** $Q_{1,sat} > G1$   nein   ja

**S7** $|Q_{1,sat}| > G2$   nein   ja

**S8** Feststellung Unterversorgung

**S9** Feststellung Überversorgung

**S10** Mitteilung an übergeordnete Regelung/ Ausgabe Warnhinweis

Fig. 4

Fig. 2

Fig. 3

Europäisches Patentamt

European Patent Office

Office européen des brevets

**EUROPÄISCHER RECHERCHENBERICHT**

Nummer der Anmeldung

**EP 21 20 6925**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 420 748 A2 (ISTA INT GMBH [DE]) 22. Februar 2012 (2012-02-22) * Absätze [0001] – [0007], [0033] – [0035], [0074] – [0076]; Abbildung 3 * * Zusammenfassung *<br>————— | 1-10 | INV.<br>F04D15/00<br>F24D19/10 |
| A | DE 10 2014 004336 A1 (WILO SE [DE]) 1. Oktober 2015 (2015-10-01) * Absatz [0050] – Absatz [0059]; Abbildungen 1-6 * * Zusammenfassung *<br>————— | 1-10 | |
| A | DE 10 2014 018020 A1 (WILO SE [DE]) 9. Juni 2016 (2016-06-09) * Absätze [0001] – [0055], [0077]; Abbildung 1 * * Zusammenfassung *<br>————— | 1-10 | |
| | | | RECHERCHIERTE SACHGEBIETE (IPC)<br><br>F04D<br>F24H<br>F24D |

Der vorliegende Recherchenbericht wurde für alle Patentansprüche erstellt

| Recherchenort | Abschlußdatum der Recherche | Prüfer |
|---|---|---|
| Den Haag | 23. März 2022 | Hermens, Sjoerd |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 20 6925

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-03-2022

| Im Recherchenbericht angeführtes Patentdokument | Datum der Veröffentlichung | Mitglied(er) der Patentfamilie | Datum der Veröffentlichung |
|---|---|---|---|
| EP 2420748 A2 | 22-02-2012 | DE 102010034769 A1 | 23-02-2012 |
| | | EP 2420748 A2 | 22-02-2012 |
| ---------- | | | |
| DE 102014004336 A1 | 01-10-2015 | CN 106133327 A | 16-11-2016 |
| | | DE 102014004336 A1 | 01-10-2015 |
| | | DK 3123033 T3 | 28-10-2019 |
| | | EP 3123033 A1 | 01-02-2017 |
| | | US 2017037857 A1 | 09-02-2017 |
| | | WO 2015144310 A1 | 01-10-2015 |
| ---------- | | | |
| DE 102014018020 A1 | 09-06-2016 | CN 107208646 A | 26-09-2017 |
| | | DE 102014018020 A1 | 09-06-2016 |
| | | EP 3230593 A1 | 18-10-2017 |
| | | US 2017268516 A1 | 21-09-2017 |
| | | WO 2016091342 A1 | 16-06-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014004336 A1